# FASCICULE DE BREVET EUROPEEN

(11) **EP 1 441 915 B1**
(45) Date de publication et mention de la délivrance du brevet: **12.07.2006**
(21) Numéro de dépôt: 02785324.1
(22) Date de dépôt: 28.10.2002
(51) Int. Cl.: B60C 9/22, B60C 9/04, B60C 9/20, B60C 9/18

(54) **PNEUMATIQUE AVEC DEMI-CARCASSES DOUBLES ET RENFORTS DE SOMMET ABAISSES**
REIFEN MIT DOPPELTEN HALBKARKASSENLAGEN UND NIEDRIGEREM VERSTÄRKUNGSGÜRTEL
DOUBLE HALF-CARCASS TYRE WITH LOWERED CROWN REINFORCEMENTS

(30) Priorité: 29.10.2001 FR 0114088
(43) Date de publication de la demande: 04.08.2004
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: JARDINE, David, F-63000 Clermont-Ferrand (FR); AUXERRE, Pascal, F-63130 Royat (FR)
(74) Mandataire: Dequire, Philippe Jean-Marie Denis
(86) Numéro de dépôt international: PCT/EP2002/012020
(87) Numéro de publication internationale: WO 2003/037657

(56) Documents cités:
- EP-A- 1 057 659
- WO-A-02/00451
- US-A- 2 958 359
- PATENT ABSTRACTS OF JAPAN vol. 2000, no. 21, 3 août 2001 (2001-08-03) & JP 2001 088511 A (BRIDGESTONE CORP), 3 avril 2001 (2001-04-03)

## Description

La présente invention concerne les pneumatiques. Plus particulièrement, elle concerne la disposition et la configuration de la structure de renforcement dans la zone du sommet du pneumatique.

Le renforcement des pneumatiques est à l'heure actuelle constitué par une ou plusieurs nappes désignées classiquement « nappes carcasses », «nappes sommet », etc. Cette façon de désigner les renforts provient du procédé de fabrication, consistant à réaliser une série de produits semi-finis en forme de nappes, pourvues de renforts filaires souvent longitudinaux, qui sont par la suite assemblées afin de confectionner un pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Ce même procédé classique implique l'utilisation d'une tringle, utilisée pour réaliser l'ancrage ou le maintien de la nappe carcasse dans la zone basse du flanc. Ainsi, classiquement, on effectue un retournement d'une portion de nappe autour d'une tringle disposée dans le bourrelet du pneumatique. On crée de la sorte un ancrage de la nappe carcasse dans le bourrelet.

La généralisation dans l'industrie de ce procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Cependant, il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les fils des différentes structures de renfort sont appliqués directement sur les couches adjacentes de mélanges caoutchoutiques, le tout étant appliqué par couches successives sur un noyau toroïdal dont la forme permet d'obtenir directement un profil s'apparentant au profil final du pneumatique en cours de fabrication. Ainsi, dans ce cas; on ne retrouve plus de «semi-finis», ni de «nappes», ni de «tringle». Les produits de base tels les mélanges caoutchoutiques et les renforts sous forme de filaments, sont directement appliqués sur le noyau. Ce noyau étant de forme toroïdale, on a plus à former l'ébauche pour passer d'un profil plat à un profil sous forme de tore.

Par ailleurs, les pneumatiques décrits dans ce document ne disposent pas du traditionnel retournement de nappe carcasse autour d'une tringle. Ce type d'ancrage est remplacé par un agencement dans lequel on dispose de façon adjacente à ladite structure de renfort de flanc des filaments circonférentiels, le tout étant noyé dans un mélange caoutchoutique d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou de renforts sous forme de filaments.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les fils de renforts d'une nappe carcasse dans le procédé classique, et les fils correspondants, en général appliqués au niveau des flancs, d'un pneumatique produit selon un procédé sans semi-finis. Le terme «zone d'ancrage» pour sa part, peut désigner tout autant le traditionnel retournement de nappe carcasse autour d'une tringle d'un procédé classique, que l'ensemble formé par les filaments circonférentiels, le mélange caoutchoutique et les portions adjacentes de renfort de flanc d'une zone basse réalisée avec un procédé avec application sur un noyau toroïdal.

Peu importe le procédé utilisé, les renforts de type carcasse, ou renforts de flancs, s'étendent habituellement d'un bourrelet à l'autre en passant par le sommet. Ils contribuent donc partiellement au renforcement de la zone de sommet. D'autres éléments, tels des fils de renforts disposés en couche simple ou multiples (comme par exemple des fils à 30 degrés par rapport à la direction circonférentielle) contribuent à établir une structure de sommet suffisamment rigide, endurante, etc, pour satisfaire aux conditions d'utilisation prévues. Le document EP-A-1 057 659 divulgue un pneumatique selon le préambule de la revendication 1.

En fonction du type d'utilisation, un nombre plus ou moins important d'éléments de renfort sont requis au niveau du sommet. Ces éléments occupent parfois une place et/ou une masse importante. L'épaisseur de la zone du sommet dépend ainsi souvent du type de renforts que cette zone doit loger. Bien que l'on souhaite souvent limiter l'épaisseur et/ou la masse de cette zone, la marge de manoeuvre est souvent limitée. En effet, le compromis «poids-encombrement-propriétés mécaniques» oblige souvent les concepteurs à être moins exigeants pour les deux premiers aspects afin de satisfaire au troisième. D'une façon ou d'une autre, l'établissement d'un équilibre parfait entre chacune des facettes de ce compromis nécessite habituellement de nombreux essais -impliquant parfois de nombreuses modifications avant l'obtention d'un équilibre adéquat.

La présente invention vise à optimiser ce compromis pour certains types de pneumatiques.

Ainsi, l'invention prévoit un pneumatique selon les caractéristiques de la revendication 1.

Une telle architecture procure de nombreux avantages. Par exemple, la région du sommet peut être amincie et/ou allégée. La zone de sommet sans structure de renfort permet une économie de matériaux. Elle permet également d'optimiser la rigidité méridienne et circonférentielle du pneumatique. Par ailleurs, la présence de renforts dont le rayon varie au centre par rapport aux bordures, permet d'augmenter la rigidité transversale.

Autrement, la zone sensiblement centrale du sommet, libérée de la présence des structures de type carcasse, peut avantageusement être utilisée pour l'intégration d'autres types d'éléments architecturaux ou structuraux, comme par exemple des renforts, câbles, fils, inserts, zones de gomme comportant des caractéristiques mécaniques différentes, etc.

Selon un exemple de réalisation avantageux de l'invention, au moins un alignement sensiblement axial de renforts circonférentiels médians est disposé radialement extérieurement, sensiblement adjacent à la portion de structure de renfort primaire médiane.

Selon un autre exemple de réalisation avantageux de l'invention, au moins un alignement sensiblement axial de renforts circonférentiels latéraux est disposé de chaque côté du pneumatique. Un tel alignement peut être disposé radialement extérieurement à la portion de structure de renfort primaire latérale, ou radialement intérieurement à la portion de structure de renfort primaire latérale.

Avec les renforts circonférentiels latéraux disposés radialement extérieurement, on peut par exemple obtenir:
- une maîtrise améliorée du profil en centrifugation;
- une rigidification circonférentielle de l'épaule susceptible de limiter le cisaillement entre les renforts sommet, contribuant ainsi à réduire les phénomènes de clivage;
- une protection conférée par les renforts métalliques contre les agressions, perforations, etc.

Avec les renforts circonférentiels latéraux disposés radialement intérieurement, on peut par exemple obtenir, en plus des avantages préalablement cités:
- de par le positionnement à proximité de la fibre neutre, les renforts circonférentiels travaillent davantage en extension, contribuant ainsi à la rigidification du sommet.

Selon un autre exemple de réalisation avantageux , l'alignement de renforts circonférentiels médians s'étend sur une largeur sensiblement identique à celle de ladite portion de structure de renfort primaire médiane.

Selon un autre exemple de réalisation, la position radiale desdits renforts circonférentiels médians permet à ces derniers de s'imbriquer entre les extrémités de structure de renfort de type carcasse, obtenant de la sorte une position radiale similaire pour ces renforts. On peut ainsi obtenir une montée du sommet sensiblement homogène sous l'effet de l'augmentation de la pression et/ou de la vitesse.

Selon un autre exemple de réalisation avantageux, le sommet comporte une zone pourvue d'une surépaisseur radialement interne. Il s'agit d'une façon particulièrement astucieuse de fournir un espace pouvant loger différents éléments architecturaux, en utilisant l'espace libre de la cavité du pneumatique, donc sans empiéter sur la zone du sommet.

La zone sommet pourvue d'une surépaisseur est avantageusement délimitée axialement par au moins une zone de transition marquant le passage de la paroi interne du pneumatique vers un rayon plus petit en se dirigeant axialement vers l'intérieur.

Selon un mode de réalisation avantageux, on bénéficie de renforts avec un rayon plus faible au centre: le fait d'accentuer la différence de rayon entre le centre du sommet et les épaules par un positionnement radialement vers l'intérieur de la limite radialement interne de la paroi interne du pneumatique permet d'augmenter la profondeur des sillons, et par le fait même la capacité de stockage de l'eau.

La structure de renfort primaire comprend avantageusement, dans les zones de jonction entre la portion de structure de renfort médiane et les portions de structures de renfort latérales, au moins une zone de transition marquant le passage entre les zones de la structure de renfort primaire de rayons différents.

Selon une variante avantageuse de réalisation, le pneumatique comporte également une structure de renfort secondaire disposée radialement extérieurement par rapport à la structure de renfort primaire, par exemple sensiblement entre les portions de structures de renfort primaires latérales.

La structure de renfort primaire et/ou secondaire peut comporter des éléments filaires généralement agencés suivant un angle différent de zéro degré par rapport à la direction circonférentielle. (II peut s'agir d'un angle fixe ou variable suivant la position axiale. Cet angle peut passer par zéro degré à un point donné, mais comporte de préférence une portion principale de son parcours à des angles différents de cette valeur).

Selon un autre exemple de réalisation avantageux de l'invention, le pneumatique comporte également une zone de mélange caoutchoutique périphérique disposée radialement extérieurement par rapport à la structure de renfort primaire, par exemple sensiblement entre les portions de structures de renfort primaire latérales. La présence d'une telle zone peut procurer divers avantages tels que par exemple : une protection contre les agressions externes, une amélioration de l'endurance et/ou du confort, une diminution de la résistance au roulement et/ou du bruit, une augmentation de la rigidité, etc.

Le pneumatique comporte avantageusement au moins une creusure sensiblement médiane en surprofondeur. Par surprofondeur, on entend que la profondeur est avantageusement plus importante que pour un pneumatique traditionnel. Par exemple, un sillon peut se prolonger radialement de façon à être sensiblement aligné radialement avec les renforts circonférentiels latéraux, ou même se prolonger radialement intérieurement par rapport à ces renforts. Cette profondeur plus importante permet d'agir à différents niveaux, selon les besoins et le type de pneumatique. Par exemple, des sillons plus profonds peuvent servir à loger/évacuer une plus grande quantité d'eau, contribuant à optimiser les qualités hydrodynamiques d'un pneumatique.

Selon un autre exemple avantageux, la structure de renfort de type carcasse est double sur au moins un des deux côtés dudit pneumatique. Il est possible d'avoir un renfort double par exemple uniquement du côté externe du pneumatique, prévu pour être monté du côté externe du véhicule. Le pneumatique est alors simple et peu coûteux, tout en présentant une excellente protection contre les aléas de la route, tels que les chocs. Il peut aussi s'agir d'un mode de renfort pour le flanc, d'un moyen de moduler ou d'augmenter la rigidité du flanc, etc.

De manière avantageuse, le pneumatique selon l'invention peut être fabriqué au moyen d'un procédé de fabrication d'un pneumatique dans lequel les différents éléments constituants sont tour à tour posés directement sur un noyau dont le profil correspond sensiblement à celui du produit final et dans lequel la pose d'une première structure de renfort d'un premier côté d'un pneumatique et d'une seconde structure de renfort d'un second côté dudit pneumatique peuvent être effectuées sensiblement simultanément.

Dans le cas d'un pneumatique fabriqué selon un tel procédé automatisé dans lequel les différents éléments constituants sont tour à tour posés directement sur un noyau dont le profil correspond sensiblement à celle du produit final, le fait de disposer de deux demi-structures indépendantes peut permettre une optimisation du temps de fabrication. Ainsi par exemple, il est possible d'utiliser deux machines de pose des structures de renfort, susceptibles de travailler simultanément lors de la fabrication du pneumatique. Il en résulte ainsi une diminution importante du temps de pose de la structure de renfort.

Dans le présent mémoire, le terme "fil" désigne en toute généralité aussi bien des monofilaments que des multifilaments, ou des assemblages comme des câbles, des retors ou bien encore n'importe quel type d'assemblage équivalent, et ceci, quels que soit la matière et le traitement de ces fils, par exemple traitement de surface ou enrobage ou préencollage pour favoriser l'adhérence sur le caoutchouc.

Un «fil orienté circonférentiellement» désigne un fil orienté sensiblement dans un même plan axial ou dans un plan faisant avec un plan axial un angle inférieur ou égal à 10°.

Pour rappel, "radialement vers le haut", ou "radialement supérieur" signifie vers les plus grands rayons.

On entend par "module d'élasticité" d'un mélange caoutchoutique, un module d'extension sécant obtenu à une déformation d'extension uniaxiale de l'ordre de 10% à température ambiante.

Une structure de renfort ou de renforcement de type carcasse sera dite radiale lorsque ses fils sont disposés à 90°, mais aussi, selon la terminologie en usage, à un angle proche de 90°.

On sait que dans la technique actuelle, la ou les nappes de carcasse sont retournées autour d'une tringle. La tringle remplit alors une fonction d'ancrage de carcasse, c'est à dire reprend la tension se développant dans les fils de carcasse sous l'effet de la pression de gonflage. Dans les configurations décrites dans la présente demande, n'utilisant pas de tringle de type traditionnel, la fonction d'ancrage de la structure de renfort de type carcasse est également assurée.

On sait aussi que, toujours dans l'état de la technique, la même tringle assure en outre une fonction de serrage du bourrelet sur sa jante. Dans les configurations décrites dans la présente demande, n'utilisant pas de tringle de type traditionnel, la fonction de serrage est également assurée, notamment par les enroulements de fils circonférentiels les plus près du siège.

Il va sans dire que l'invention peut être utilisée en adjoignant au bourrelet ou à la zone basse du pneumatique en général d'autres éléments, comme certaines variantes vont l'illustrer. De même, l'invention peut être utilisée en multipliant les structures de renfort de même nature, ou même en adjoignant un autre type de structure de renfort.

Tous les détails de réalisation sont donnés dans la description qui suit, complétée par les figures 1 à 6 où:
la figure 1 est une coupe radiale montrant essentiellement un flanc, un bourrelet et une portion du sommet d'une première forme d'exécution d'un pneumatique selon l'invention ;
la figure 2 est une coupe radiale montrant essentiellement un flanc, un bourrelet et une portion du sommet d'une variante de la forme d'exécution de la figure 1;
la figure 3 est une coupe radiale montrant essentiellement un flanc, un bourrelet et une portion du sommet d'une autre variante de la forme d'exécution de la figure 1;
la figure 4 est une coupe radiale montrant essentiellement un flanc, un bourrelet et une portion du sommet d'une autre forme d'exécution d'un pneumatique selon l'invention;
la figure 5 est une coupe radiale montrant essentiellement un flanc, un bourrelet et une portion du sommet d'une autre variante de la forme d'exécution de la figure 1 ;
le figure 6 illustre les agencements de quelques éléments architecturaux de base d'un pneumatique selon l'invention.

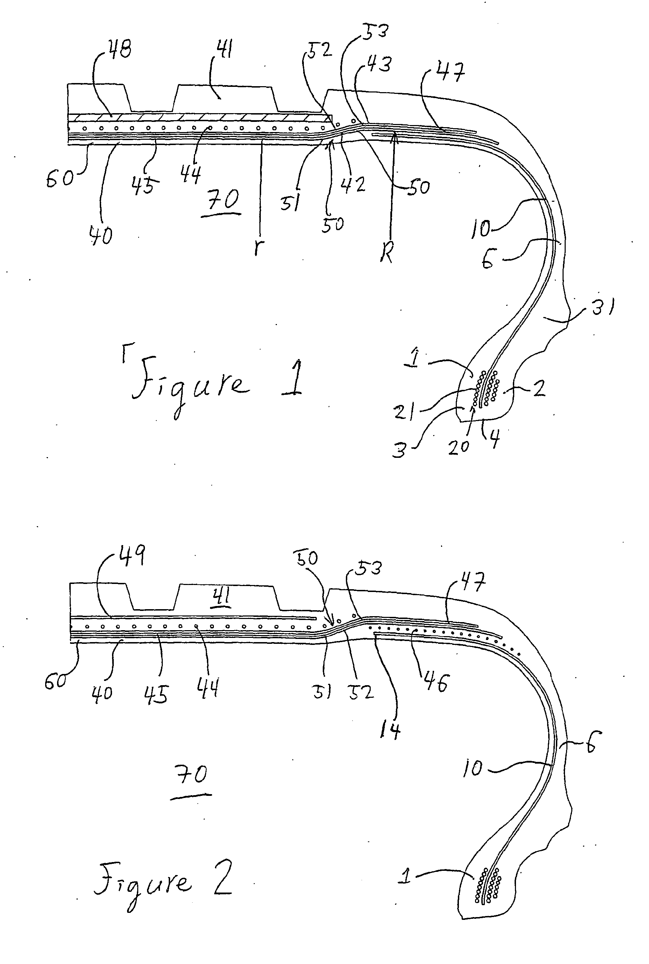

La figure 1 illustre une vue en coupe d'une première forme d'exécution du pneumatique selon l'invention. Le bourrelet 1 comporte une portion axialement externe 2 prévue et conformée de façon à être placée contre le rebord d'une jante. Le bourrelet 1 se termine radialement vers l'intérieur par un siège de bourrelet 4, adapté pour être disposé contre un siège de jante. Le bourrelet comporte également une portion axialement interne 3, s'étendant sensiblement radialement depuis le siège 4 vers le flanc 6.

Le pneumatique comporte également une structure de renfort 10 ou de renforcement de type carcasse pourvue de renforts avantageusement configurés selon un agencement sensiblement radial. Cette structure comporte de préférence deux portions, par exemple une de chaque côté du pneumatique, agencées par exemple le long des flancs, sans couvrir la totalité du sommet.

Le sommet 40 comporte une armature constituée d'au moins une et de préférence deux structures de renfort primaire (nappes sommet), procurant à cette zone du pneumatique la protection et la rigidité requises. Dans l'exemple illustré à la figure 1, une structure de renfort primaire interne 42 et une structure de renfort primaire externe 43 sont disposées de manière adjacente et sensiblement parallèles l'une à l'autre. De préférence, l'orientation des fils des structures de renfort primaires est inversée et croisée. Un espace rempli de mélange caoutchoutique adapté est prévu entre les deux structures afin d'éviter tout contact entre elles. Les structures de renfort primaires se partagent chacune en deux zones distinctes formant d'une part des portions médianes 45 de structures de renfort primaire, et d'autre part, des portions latérales 47 de structures de renfort primaires, disposées axialement de part de d'autre des portions médianes 45. Les portions médianes 45 sont disposées radialement plus à l'intérieur que les portions latérales 47. Des zones de jonction 50 assurent une liaison entre les zones radialement espacées. Les zones de jonctions 50 peuvent être formées par exemple, en partant d'une bordure d'une portion médiane, par un premier secteur arqué 51 permettant à la structure de renfort primaire de passer à un profil sensiblement rectiligne à un profil s'étendant radialement et axialement vers l'extérieur, puis par un secteur sensiblement rectiligne 52, permettant de remonter radialement vers l'extérieur, puis par un secteur 53 arqué permettant de réaligner le profil dans une direction sensiblement axialement extérieure. Tel qu'illustré à la figure 1, une telle zone de jonction 50 forme avantageusement un profil en forme de « S » sensiblement étiré. Selon une variante d'éxécution avantageuse de l'invention, la zone de jonction 50 est telle que les rayons définissant les secteurs arqués 51 et 53 sont sensiblement opposés, les plus grands possible, de façon à faire tendre la longueur du secteur sensiblement rectiligne 52 vers zéro.

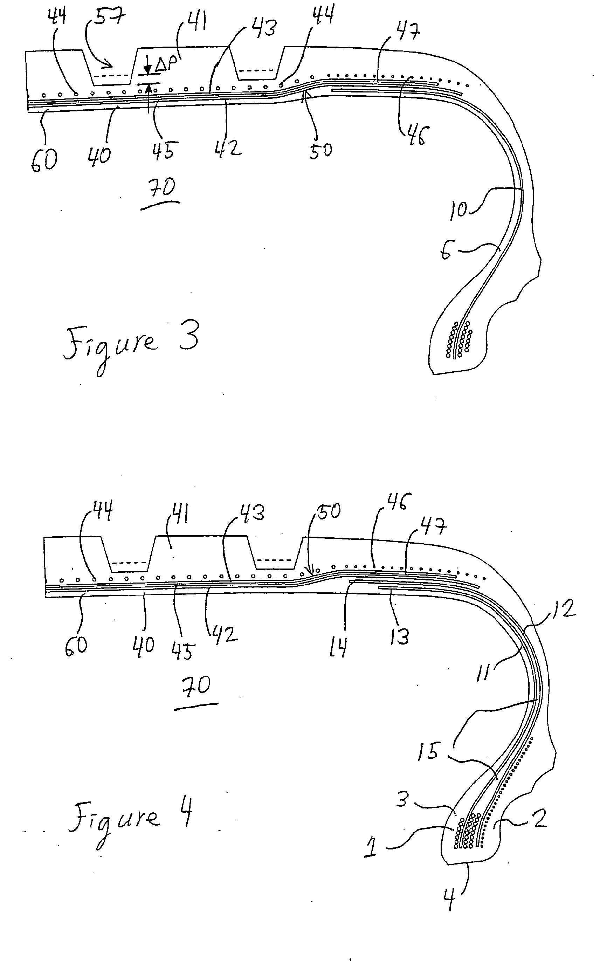

L'armature de sommet comporte également une série de renforts circonférentiels 44 disposés sensiblement à zéro degré et sensiblement parallèles les uns aux autres. L'alignement formé par les renforts couvre de préférence au moins la portion centrale du sommet. Les renforts sont avantageusement constitués de fils sensiblement circonférentiels. La présence d'un tel agencement peut être souhaitée pour optimiser les propriétés mécaniques du sommet du pneumatique notamment en terme de rigidité circonférentielle. La série de renforts circonférentielle peut se subdiviser en deux portions : une portion de renforts circonférentiels médians 44, et une portion de renforts circonférentiels latéraux 46, tel qu'illustré à la figure 2.

Afin de bénéficier au maximum de l'espace libéré par la suppression de la portion centrale (ou de sommet) de la structure de renfort 10, la position radiale préférentielle des renforts circonférentiels 44 est telle que ceux-ci sont sensiblement disposés entre les extrémités 14 des renforts latéraux 10.

Les fils de la portion 46 sont en bordure de sommet, avantageusement disposés radialement entre d'une part les structures de renfort 10 et d'autre part les portions latérales 47 de structures de renfort primaires, tel qu'illustré à la figure 2. De cette façon, les fils de renforts circonférentiels médians 44 et les fils de renforts circonférentiels latéraux 46 sont avantageusement sensiblement alignés radialement. D'autres agencements sont également possible, par exemple avec les fils de portions de renforts circonférentiels latéraux 46 disposés radialement extérieurement par rapport portions latérales de structures de renfort primaires 47. Les fils de portions de renforts circonférentiels latéraux 46 sont avantageusement disposés axialement sensiblement extérieurement aux fils de renforts circonférentiels médians 44. Tel qu'illustré à la figure 2, la zone de jonction 50 sépare alors ces deux portions.

Une bande de roulement 41 est prévue dans la portion radialement externe du sommet.

Dans l'exemple illustré à la figure 1, une zone de mélange caoutchoutique périphérique 48 est disposée radialement extérieurement aux renforts circonférentiels 44. En largeur, elle peut occuper une portion ou encore la totalité de l'espace disponible entre les portions latérales de structures de renfort primaires. La disposition spécifique des structures de renfort primaires, axialement vers l'intérieur, sensiblement à proximité immédiate de la cavité interne du pneumatique, permet de ménager un espace dans la zone radialement externe du sommet, sous la bande de roulement. De manière avantageuse, seule une mince couche de mélange caoutchoutique 60 sépare la structure de renfort primaire interne 42 de la cavité interne 70 du pneumatique.

Le zone libérée du sommet est utilisée dans ce mode de réalisation afin de loger un mélange caoutchoutique particulier dont les caractéristiques sont choisies en fonction du type de pneumatique. Voici quelques exemples non limitatifs de types de mélanges :
- un mélange amortissant : ce mélange est susceptible d'agir positivement sur le confort, en particulier sur le bruit et/ou le bourdonnement de caisse ;
- un mélange à haut module d'élasticité : un tel mélange est susceptible d'agir favorablement sur le comportement en dérive ;
- un mélange peu hystérétique : un tel mélange est susceptible de réduire les pertes hystérétiques au niveau du sommet avec un effet favorable au niveau de la résistance au roulement.

Dans l'exemple illustré à la figure 2, une structure de renfort secondaire 49 est disposée radialement extérieurement à la structure de renfort primaire. En largeur, elle peut occuper une portion ou encore la totalité de l'espace disponible entre les portions latérales de structures de renfort primaires 47. La disposition spécifique des structures de renfort primaires, axialement vers l'intérieur, sensiblement à proximité immédiate de la cavité interne du pneumatique, permet de ménager un espace dans la zone radialement externe du sommet, sous la bande de roulement. De manière avantageuse, seule une mince couche de mélange caoutchoutique 60 sépare la structure de renfort primaire interne 42 de la cavité interne 70 du pneumatique.

La zone libérée du sommet est utilisée dans ce mode de réalisation afin de loger une structure de renfort secondaire comportant avantageusement des éléments de renfort filaires particuliers dont les caractéristiques sont choisies en fonction du type de pneumatique. Par exemple, des éléments de renforts orientés sensiblement à 90 par rapport à la direction circonférentielle, en particulier des renforts métalliques avec une rigidité de compression élevée, afin d'augmenter, la rigidité de la zone du sommet.

Dans l'exemple illustré à la figure 3, l'espace libéré dans la zone externe du sommet est utilisé pour disposer des éléments de sculpture pourvus de creusures 57, comme par exemple des sillons, dont la profondeur est avantageusement plus importante que pour un pneumatique traditionnel, tel qu'illustré en traits pointillés à des fins de comparaison avec la cote de comparaison ΔP. Cette profondeur plus importante permet d'agir à différents niveaux, selon les besoins et le type de pneumatique. Par exemple, des sillons plus profonds peuvent servir à loger/évacuer une plus grande quantité d'eau, contribuant à optimiser les qualités hydrodynamiques d'un pneumatique. On peut également concevoir un pneumatique dont la longévité est augmentée, dû aux éléments de sculpture qui ont la possibilité de subir une usure plus prononcée.

Selon une variante avantageuse illustrée à la figure 4, au moins une des deux portions comporte une structure de renfort munie de renforts doubles, à savoir un renfort interne 11 et un renfort externe 12, selon leur position respective au niveau du profil méridien du pneumatique. Les renforts sont disposés de manière adjacente et sensiblement parallèles l'un à l'autre et sont espacés ou séparés l'un de l'autre par une couche de mélange caoutchoutique de séparation 15.

Dans la portion radialement externe du flanc ou dans la région du sommet 40, les renforts interne 11 et externe 12 comportent chacun une portion d'extrémité respectivement 13 et 14. Ces portions d'extrémités se terminent avantageusement avec un décalage. Ainsi, dans l'exemple illustré, les positions axiales de la portion d'extrémité du renfort interne 13 et la portion d'extrémité du renfort externe 14 ne sont pas les mêmes: la portion d'extrémité du renfort interne 13 est axialement plus à l'extérieur que la portion d'extrémité du renfort externe 14.

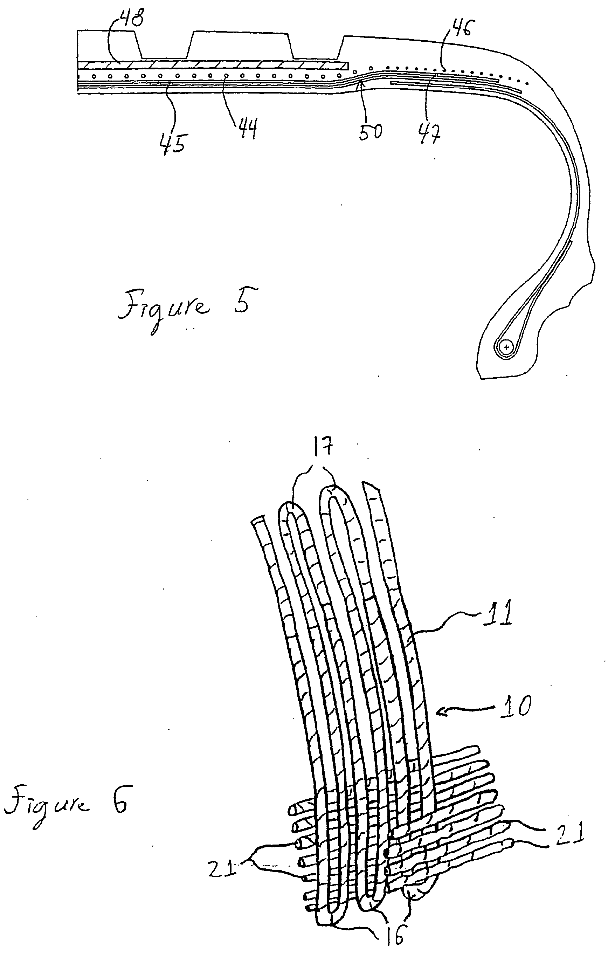

La figure 5 illustre une variante comportant une zone basse traditionnelle avec un retournement autour d'une tringle. Une telle zone basse peut également être utilisée pour l'un ou l'autre mode de réalisation de la présente invention.

La figure 6 illustre plus particulièrement une disposition avantageuse des fils de la structure de renfort 10. La figure 6 illustre une portion du parcours d'une structure comprenant un seul fil disposé sous la forme d'allers-retours formant une série de sections filaires sensiblement parallèles, réunies à la base et à leur sommet par des boucles de base 16 et des boucles de sommet 17. La seconde structure 12 (non illustrée sur cette vue en coupe) est avantageusement configurée de façon similaire. La figure 6 illustre par ailleurs l'interface de la zone basse entre la structure 10 et les fils 21.

Afin d'assurer un parfait ancrage de la structure de renfort, on réalise de préférence un bourrelet composite stratifié. A l'intérieur du bourrelet 1, entre les alignements de fil de la structure de renfort, on dispose des fils orientés circonférentiellement. Ceux-ci sont disposés en une pile comme sur les figures, ou en plusieurs piles adjacentes, ou en paquets, ou en toute disposition judicieuse, selon le type de pneumatique et/ou les caractéristiques recherchées.

Des fils circonférentiels 21 agencés de préférence sous forme de piles, forment un agencement de fils d'ancrage 20, prévu dans chacun des bourrelets. Ces fils sont de préférence métalliques, et éventuellement laitonnés. Dans chaque pile, les fils sont avantageusement sensiblement concentriques et superposés.

Les portions d'extrémité radialement internes de la structure de renfort 10 coopèrent avec les bourrelets. Il se crée ainsi un ancrage de ces portions dans lesdits bourrelets de manière à assurer l'intégrité du pneumatique. Afin de favoriser cet ancrage, l'espace entre les fils circonférentiels et la structure de renfort est occupée par un mélange caoutchoutique de liaison. On peut également prévoir l'utilisation de plusieurs mélanges ayant des caractéristiques différentes, délimitant plusieurs zones, les combinaisons de mélanges et les agencements résultants étant quasi-illimités.

Les arrangements de fils peuvent être agencés et fabriqués de plusieurs façons. Par exemple, une pile peut avantageusement être constituée d'un seul fil enroulé (sensiblement à zéro degré) en spirale sur plusieurs tours, de préférence depuis le plus petit diamètre vers le plus grand diamètre. Une pile peut également être constituée de plusieurs-fils concentriques posés l'un dans l'autre, de façon à ce que l'on superpose des anneaux de diamètre progressivement croissant. Il n'est pas nécessaire d'ajouter un mélange de caoutchouc pour assurer l'imprégnation du fil de renfort, ou des enroulements circonférentiels de fil.

Afin de positionner les fils de renforcement de façon aussi précise que possible, il est très avantageux de confectionner le pneumatique sur support rigide, par exemple un noyau rigide imposant la forme de sa cavité intérieure. On applique sur ce noyau, dans l'ordre requis par l'architecture finale, tous les constituants du pneumatique, qui sont disposé directement à leur place finale, sans que le profil du pneumatique doive être retourné ou replié lors de la confection. Cette confection peut par exemple utiliser les dispositifs décrits dans le brevet EP 0 580 055, ainsi que la demande française 00/01394, pour la pose des fils de renfort de carcasse, et dans le document EP 0 264 600 pour la pose des gommes caoutchoutiques. Le pneumatique peut être moulé et vulcanisé comme exposé dans le brevet US 4 895 692.

## Revendications

1. Pneumatique comportant au moins une structure de renfort (10) de type carcasse ancrée de chaque côté du pneumatique dans un bourrelet (1) dont la base est destinée à être montée sur un siège de jante, une armature de sommet, chaque bourrelet se prolongeant radialement vers l'extérieur par un flanc (6), les flancs rejoignant radialement vers l'extérieur une bande de roulement, la structure de renfort (10) s'étendant circonférentiellement depuis le bourrelet (1) vers ledit flanc (6), ladite structure de renfort (10) étant discontinue sur au moins une portion du sommet du pneumatique, ladite armature de sommet comportant d'une part au moins une structure de renfort primaire (42, 43) couvrant sensiblement toute la largeur du sommet, lesdites structures de renfort primaires (42, 43) se partageant chacune en deux zones distinctes formant d'une part des portions médianes (45) de structures de renfort primaire, et d'autre part, des portions latérales (47) de structures de renfort primaires, disposées axialement de part et d'autre des portions médianes (45), **caractérisé en ce que** les portions médianes (45) sont disposées radialement plus à l'intérieur que les portions latérales (47) et des zones de jonction (50) assurent une liaison entre les zones radialement espacées, et au moins un alignement sensiblement axial de renforts circonférentiels médians (44) est disposé radialement extérieurement, sensiblement adjacent à la portion de structure de renfort primaire médiane (45).

2. Pneumatique selon la revendication 1, dans lequel au moins un alignement sensiblement axial de renforts circonférentiels latéraux (46) est disposé de chaque côté du pneumatique.

3. Pneumatique selon la revendication 2, dans lequel ledit alignement (46) est disposé radialement extérieurement à la portion de structure de renfort primaire latérale (47).

4. Pneumatique selon la revendication 2, dans lequel ledit alignement (46) est disposé radialement intérieurement à la portion de structure de renfort primaire latérale (47).

5. Pneumatique selon une des revendications précédentes, dans lequel l'alignement de renforts circonférentiels médians (44) s'étend sur une largeur sensiblement identique à celle de ladite portion de structure de renfort primaire médiane (45).

6. Pneumatique selon une des revendications précédentes, dans lequel la position radiale desdits renforts circonférentiels médians (44) permet à ces derniers de s'imbriquer entre les extrémités (13, 14) de structure de renfort de type carcasse (10).

7. Pneumatique selon l'une des revendications précédentes, dans lequel le sommet (40) comporte une zone pourvue d'une surépaisseur radialement interne.

8. Pneumatique selon la revendication 7, dans lequel la zone sommet pourvue d'une surépaisseur est délimitée axialement par au moins une zone de transition marquant le passage de la paroi interne du pneumatique vers un rayon plus petit en se dirigeant axialement vers l'intérieur.

9. Pneumatique selon l'une des revendications 1 à 8, comportant également une structure de renfort secondaire disposée radialement extérieurement par rapport à la structure de renfort primaire.

10. Pneumatique selon l'une des revendications 1 à 9 , dans lequel la structure de renfort primaire et/ou secondaire comporte des éléments filaires généralement agencés suivant un angle différent de zéro degré par rapport à la direction circonférentielle.

11. Pneumatique selon l'une des revendications 1 à 9, comportant également une zone de mélange caoutchoutique périphérique disposée radialement extérieurement par rapport à la structure de renfort primaire.

12. Pneumatique selon l'une des revendications précédentes, comportant également au moins une creusure sensiblement médiane en surprofondeur.

13. Pneumatique selon l'une des revendications précédentes, dans lequel la structure de renfort de type carcasse est double sur au moins un des deux côtés dudit pneumatique.

## Claims

1. A tyre comprising at least one reinforcement structure (10) of carcass type anchored on each side of the tyre in a bead (1) whose base is designed to be mounted on a rim seat, a crown reinforcement, each bead being extended radially towards the outside by a sidewall (6) , the sidewalls meeting up radially towards the outside with a tread, the reinforcement structure (10) extending circumferentially from the bead (1) towards said sidewall (6), said reinforcement structure (10) being discontinuous over at least a portion of the crown of the tyre, said crown reinforcement comprising on the one hand at least one primary reinforcement structure (42, 43) covering substantially the entire width of the crown, said primary reinforcement structures (42, 43) each being divided into two separate zones forming on the one hand median portions (45) of primary reinforcement structures and on the other hand lateral portions (47) of primary reinforcement structures, disposed axially each side of the median portions (45), **characterised in that** the median portions (45) are disposed radially more to the inside than the lateral portions (47) and junction zones (50) ensure connection of the radially spaced zones, and at least one substantially axial row of median circumferential reinforcements (44) is disposed radially to the outside, substantially adjacent the median primary reinforcement structure portion (45).

2. A tyre according to claim 1, in which at least one substantially axial row of lateral circumferential reinforcements (46) is disposed on each side of the tyre.

3. A tyre according to claim 2, in which said row (46) is disposed radially to the outside of the lateral primary reinforcement structure portion (47).

4. A tyre according to claim 2, in which said row (46) is disposed radially to the inside of the lateral primary reinforcement structure portion (47).

5. A tyre according to one of the preceding claims, in which the row of median circumferential reinforcements (44) extends over a width substantially identical to that of said median primary reinforcement structure portion (45).

6. A tyre according to one of the preceding claims, in which the radial position of said median circumferential reinforcements (44) allows the latter to overlap between the ends (13, 14) of the carcass-type reinforcement structure (10).

7. A tyre according to one of the preceding claims, in which the crown (40) comprises a zone provided with a radially inner excess thickness.

8. A tyre according to claim 7, in which the crown zone provided with an excess thickness is delimited axially by at least one transitional zone signalling the changeover of the internal wall of the tyre towards a smaller radius while extending axially inwards.

9. A tyre according to one of claims 1 to 8, also comprising a secondary reinforcement structure disposed radially to the outside relative to the primary reinforcement structure.

10. A tyre according to one of claims 1 to 9, in which the primary and/or secondary reinforcement structure comprises cord elements generally arranged at an angle other than zero degrees relative to the circumferential direction.

11. A tyre according to one of claims 1 to 9, also comprising a peripheral rubber mix zone disposed radially to the outside relative to the primary reinforcement structure.

12. A tyre according to one of the preceding claims, also comprising at least one substantially median extra-deep hollow.

13. A tyre according to one of the preceding claims, in which the reinforcement structure of carcass type is double over at least one of the two sides of said tyre.

## Patentansprüche

1. Luftreifen, der mindestens eine Verstärkungsstruktur (10) vom Karkassentyp, die auf jeder Seite des Luftreifens in einem Wulst (1) verankert ist, dessen Basis auf einen Felgensitz montiert werden soll, und eine Scheitelbewehrung aufweist, wobei sich der Wulst radial nach außen in eine Flanke (6) erstreckt, die Flanken radial nach außen einen Laufstreifen verbinden, die Verstärkungsstruktur (10) sich in Umfangsrichtung vom Wulst (1) zur Flanke (6) erstreckt, die Verstärkungsstruktur (10) an zumindest einem Teil des Scheitels des Luftreifens nicht kontinuierlich ist, die Scheitelbewehrung einerseits mindestens eine primäre Verstärkungsstruktur (42, 43) umfasst, die in etwa die gesamte Breite des Scheitels bedeckt, sich die primären Verstärkungsstrukturen (42, 43) jeweils in zwei unterschiedliche Bereiche aufteilen, die einerseits die Mittelbereiche (45) der primären Verstärkungsstrukturen und andererseits die Seitenbereiche (47) der primären Verstärkungsstrukturen bilden, die axial auf beiden Seiten der Mittelbereiche (45) angeordnet sind,
**dadurch gekennzeichnet, dass**
die Mittelbereiche (45) radial weiter innen liegen als die Seitenbereiche (47) und Verbindungszonen (50) eine Verbindung zwischen den radial auseinanderliegenden Zonen sicherstellen und mindestens eine in etwa axiale Anordnung von mittleren umlaufenden Verstärkungsdrähten (44) radial außen angeordnet ist, in etwa angrenzend an den Bereich der mittleren primären Verstärkungsstruktur (45).

2. Luftreifen nach Anspruch 1, bei dem mindestens eine in etwa axiale Anordnung von seitlichen umlaufenden Verstärkungen (46) auf jeder Seite des Luftreifens angebracht ist.

3. Luftreifen nach Anspruch 2, bei dem die Anordnung (46) radial außen an dem Bereich der seitlichen primären Verstärkungsstruktur (47) angeordnet ist.

4. Luftreifen nach Anspruch 2, bei dem die Anordnung (46) radial innen an dem Bereich der primären seitlichen Verstärkungsstruktur (47) angeordnet ist.

5. Luftreifen nach einem der vorhergehenden Ansprüche, bei dem sich die Anordnung der mittleren umlaufenden Verstärkungen (44) über eine Breite erstreckt, die in etwa dem Bereich der mittleren primären Verstärkungsstruktur (45) entspricht.

6. Luftreifen nach einem der vorhergehenden Ansprüche, bei dem die radiale Position dieser mittleren umlaufenden Verstärkungen (44) es ermöglicht, dass diese zwischen den Enden (13, 14) der Verstärkungsstruktur vom Karkassentyp (10) eingebettet sind.

7. Luftreifen nach einem der vorhergehenden Ansprüche, bei dem der Scheitel (40) einen Bereich umfasst, der radial innen mit einer größeren Dicke versehen ist.

8. Luftreifen nach Anspruch 7, bei dem die Scheitelzone, die mit einer größeren Dicke versehen ist, axial durch mindestens eine Übergangszone begrenzt wird, die den Übergang der inneren Wand des Luftreifens in Richtung kleinerer Radien axial nach innen kennzeichnet.

9. Luftreifen nach einem der Ansprüche 1 bis 8, der auch eine sekundäre Verstärkungsstruktur aufweist, die in Bezug auf die primäre Verstärkungsstruktur radial außen angeordnet ist.

10. Luftreifen nach einem der Ansprüche 1 bis 9, bei dem die primäre Verstärkungsstruktur und/oder die sekundäre Verstärkungsstruktur Drahtelemente aufweist, die im Allgemeinen in Bezug auf die Umfangsrichtung in einem von null Grad verschiedenen Winkel angeordnet sind.

11. Luftreifen nach einem der Ansprüche 1 bis 9, der auch einen äußeren Kautschukmischungsbereich aufweist, wobei die Mischung in Bezug auf die primäre Verstärkungsstruktur radial außen angebracht ist.

12. Luftreifen nach einem der vorhergehenden Ansprüche, der eine in etwa in der Mittel liegende Vertiefung mit größerer Tiefe aufweist.

13. Luftreifen nach einem der vorhergehenden Ansprüche, bei dem die Verstärkungsstruktur vom Karkassentyp an zumindest einer der beiden Seiten des Luftreifens doppelt ist.
